# EUROPEAN PATENT APPLICATION

(11) **EP 4 429 379 A1**
(43) Date of publication of application: **11.09.2024**
(21) Application number: 22889317.8
(22) Date of filing: 02.11.2022
(51) Int. Cl.: H04W 72/12

(54) **INFORMATION PROCESSING METHOD AND APPARATUS, COMMUNICATION DEVICE, AND READABLE STORAGE MEDIUM**

(30) Priority: 04.11.2021 CN 202111301175
(71) Applicant: Vivo Mobile Communication Co., Ltd., Dongguan, Guangdong 523863 (CN)
(72) Inventor: LI, Gen, Dongguan, Guangdong 523863 (CN); LIU, Siqi, Dongguan, Guangdong 523863 (CN); JI, Zichao, Dongguan, Guangdong 523863 (CN)
(74) Representative: Lavoix
(86) International application number: PCT/CN2022/129252
(87) International publication number: WO 2023/078295

(57) **Abstract**

This application discloses an information processing method and apparatus, a communication device, and a readable storage medium, and belongs to the field of communication technologies. The information processing method in embodiments of this application includes: when L scheduling cells are used to schedule a target cell, a communication device determines a size of DCI of each scheduling cell, where the DCI is used to schedule the target cell. L is greater than or equal to 2. The size of the DCI satisfies at least one of the following: the size of the DCI, used to schedule the target cell, of each scheduling cell satisfies a first condition; and a size of DCI of the L scheduling cells that is used to schedule the target cell satisfies the first condition. The first condition includes at least one of the following: a quantity of different sizes of DCI used by a terminal to perform PDCCH monitoring is not greater than a first value; and a quantity of different sizes of DCI used by a terminal to perform PDCCH monitoring scrambled by using a specific identifier is not greater than a second value.

## Description

### CROSS-REFERENCE TO RELATED APPLICATIONS

This application claims priority to Chinese Patent Application No.202111301175.2 filed in China on November 4, 2021, which is incorporated herein by reference in its entirety.

### TECHNICAL FIELD

This application relates to the field of communication technologies, and specifically, to an information processing method and apparatus, a communication device, and a readable storage medium.

### BACKGROUND

To control complexity of performing physical downlink control channel (Physical Downlink Control Channel, PDCCH) monitoring by a terminal, for each scheduled cell, a quantity of sizes of downlink control information (Downlink Control Information, DCI) used by the terminal to perform PDCCH blind detection needs to be limited. However, for a scenario in which a plurality of cells are used to schedule a same cell, how to process a size of DCI to satisfy a requirement on the size of the DCI is not currently determined.

### SUMMARY

Embodiments of this application provide an information processing method and apparatus, a communication device, and a readable storage medium, to resolve a problem of how to process a size of DCI to satisfy a requirement on the size of the DCI in a scenario in which a plurality of cells are used to schedule a same cell.

According to a first aspect, an information processing method is provided, and the method includes:
When L scheduling cells are used to schedule a target cell, a communication device determines a size of DCI of each scheduling cell, where the DCI is used to schedule the target cell.

L is greater than or equal to 2. The size of the DCI satisfies at least one of the following:
the size of the DCI, used to schedule the target cell, of each scheduling cell satisfies a first condition; and
a size of DCI of the L scheduling cells that is used to schedule the target cell satisfies the first condition.

The first condition includes at least one of the following:
a quantity of different sizes of DCI used by a terminal to perform PDCCH monitoring is not greater than a first value; and
a quantity of different sizes of DCI used by a terminal to perform PDCCH monitoring scrambled by using a specific identifier is not greater than a second value.

According to a second aspect, an information processing apparatus is provided, including:
a determining module, configured to determine, when L scheduling cells are used to schedule a target cell, a size of DCI of each scheduling cell, where the DCI is used to schedule the target cell.
L is greater than or equal to 2. The size of the DCI satisfies at least one of the following:
the size of the DCI, used to schedule the target cell, of each scheduling cell satisfies a first condition; and
a size of DCI of the L scheduling cells that is used to schedule the target cell satisfies the first condition.

The first condition includes at least one of the following:
a quantity of different sizes of DCI used by a terminal to perform PDCCH monitoring is not greater than a first value; and
a quantity of different sizes of DCI used by a terminal to perform PDCCH monitoring scrambled by using a specific identifier is not greater than a second value.

According to a third aspect, a communication device is provided, including a processor, a memory, and a program or instructions stored in the memory and executable on the processor. When the program or instructions are executed by the processor, the step of the method according to the first aspect is implemented.

According to a fourth aspect, a communication device is provided, including a processor and a communication interface. The processor is configured to determine a size of DCI of each scheduling cell when L scheduling cells are used to schedule a target cell, where the DCI is used to schedule the target cell. L is greater than or equal to 2. The size of DCI satisfies at least one of the following: the size of the DCI, used to schedule the target cell, of each scheduling cell satisfies a first condition; and a size of DCI of the L scheduling cells that is used to schedule the target cell satisfies the first condition. The first condition includes at least one of the following: a quantity of different sizes of DCI used by a terminal to perform PDCCH monitoring is not greater than a first value; and a quantity of different sizes of DCI used by a terminal to perform PDCCH monitoring scrambled by using a specific identifier is not greater than a second value.

According to a fifth aspect, a readable storage medium is provided, and the readable storage medium stores a program or instructions. When the program or instructions are executed by a processor, the step of the method according to the first aspect is implemented.

According to a sixth aspect, a chip is provided, including a processor and a communication interface. The communication interface is coupled to the processor, and the processor is configured to run a program or instructions to implement the step of the method according to the first aspect.

According to a seventh aspect, a computer program/computer program product is provided. The computer program/computer program product is stored in a non-transient storage medium, and the program/program product is executed by at least one processor to implement the step of the method according to the first aspect.

In embodiments of this application, when the L scheduling cells are used to schedule the target cell, the size of the DCI of each scheduling cell may be determined, where the DCI is used to schedule the target cell. L≥2. The size of the DCI satisfies at least one of the following: the size of the DCI, used to schedule the target cell, of each scheduling cell satisfies a first condition; and a size of DCI of the L scheduling cells that is used to schedule the target cell satisfies the first condition. The first condition includes at least one of the following: a quantity of different sizes of DCI used by a terminal to perform PDCCH monitoring is not greater than a first value; and a quantity of different sizes of DCI used by a terminal to perform PDCCH monitoring scrambled by using a specific identifier is not greater than a second value. In this way, a requirement on the size of the DCI may be satisfied when a plurality of cells are used to schedule a same cell.

### BRIEF DESCRIPTION OF THE DRAWINGS

FIG. 1 is a block diagram of a wireless communication system to which an embodiment of this application is applicable;
FIG. 2 is a flowchart of an information processing method according to an embodiment of this application;
FIG. 3 is a schematic diagram of a structure of an information processing apparatus according to an embodiment of this application;
FIG. 4 is a schematic diagram of a structure of a communication device according to an embodiment of this application;
FIG. 5 is a schematic diagram of a structure of a terminal according to an embodiment of this application; and
FIG. 6 is a schematic diagram of a structure of a network side device according to an embodiment of this application.

### DETAILED DESCRIPTION

The following clearly describes technical solutions in embodiments of this application with reference to the accompanying drawings in embodiments of this application. Apparently, the described embodiments are some of the embodiments of this application rather than all of the embodiments. All other embodiments obtained by a person of ordinary skill in the art based on embodiments of this application shall fall within the protection scope of this application.

In the specification and claims of this application, the terms "first", "second", and the like are intended to distinguish between similar objects but do not indicate a particular order or sequence. It should be understood that the terms used in such a way are interchangeable in a proper case, so that embodiments of this application can be implemented in an order other than that illustrated in the accompanying drawings or described herein. The objects distinguished by the terms "first" and "second" are usually of a same category, and a quantity of the objects is not limited, for example, a first object may be one or more. In addition, in the specification and claims, "and/or" indicates at least one of the connected objects, and the character "/" generally indicates an "or" relationship between the associated objects.

It is worth noting that, the technologies described in embodiments of this application are not limited to a long term evolution (Long Term Evolution, LTE) or an LTE-advanced (LTE-Advanced, LTE-A) system, or may alternatively be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in embodiments of this application may usually be used interchangeably. The technology described may be applied to the foregoing systems and radio technology, or may be applied to other systems and radio technologies. Anew radio (New Radio, NR) system is described for an example purpose in the following descriptions, and NR terms are used in most of the following descriptions. However, these technologies may alternatively be applied to applications other than an NR system application, such as a 6^{th} generation (6^{th} Generation, 6G) communication system.

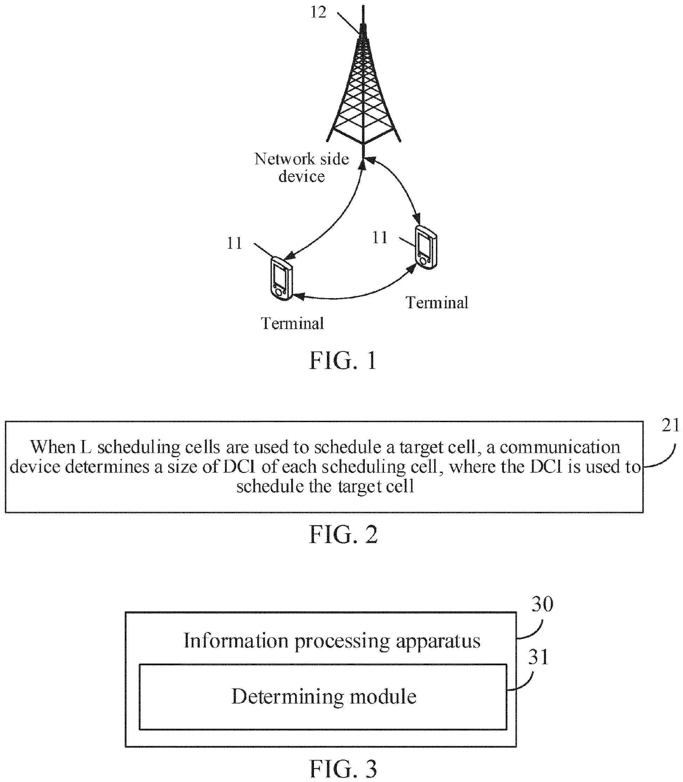

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE), and the terminal 11 may be a terminal side device such as a mobile phone, a tablet personal computer (Tablet Personal Computer), a laptop computer (Laptop Computer) that is also referred to as a notebook computer, a personal digital assistant (Personal Digital Assistant, PDA), a palmtop, a netbook, an ultra-mobile personal computer (ultra-mobile personal computer, UMPC), a mobile Internet device (Mobile Internet Device, MID), an augmented reality (augmented reality, AR) or a virtual reality (virtual reality, VR) device, a robot, a wearable device (Wearable Device), vehicle user equipment (Vehicle User Equipment, VUE), pedestrian user equipment (Pedestrian User Equipment, PUE), and a smart home (home equipment with a wireless communication function, such as a refrigerator, a TV, a washing machine, or furniture). The wearable device includes: a smart watch, a smart band, a smart headset, smart glasses, smart jewelry (such as a smart bracelet, a smart hand chain, a smart ring, a smart necklace, a smart anklet, and a smart foot chain), a smart wristband, smart clothing, a game machine, and the like. It should be noted that, a specific type of the terminal 11 is not limited in embodiments of this application. The network side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wi-Fi node, a transmitting receiving point (Transmitting Receiving Point, TRP), or another appropriate term in the field. The base station is not limited to a specific technical term provided that the same technical effect is achieved. It should be noted that, in embodiments of this application, only a base station in a NR system is used as an example, but a specific type of the base station is not limited.

The following describes, in detail with reference to the accompanying drawings and by using some embodiments and application scenarios thereof, the information processing method and apparatus, the communication device, and the readable storage medium provided in embodiments of this application.

FIG. 2 is a flowchart of an information processing method according to an embodiment of this application. The method is performed by a communication device, and the communication device may be a terminal or a network side device. As shown in FIG. 2, the method includes the following steps.

Step 21: When L scheduling cells are used to schedule a target cell, a communication device determines a size of DCI of each scheduling cell, where the DCI is used to schedule the target cell.

In this embodiment, L is greater than or equal to 2, that is, L≥2. For example, the target cell is a primary cell (Primary cell, Pcell). When a secondary cell (Secondary Cell, Scell) is configured to be used to schedule the Pcell, the Pcell is scheduled by using both the Scell and the Pcell. In this case, L is equal to 2.

Optionally, the L scheduling cells may satisfy at least one of the following conditions:
being all in an activated (activated) state;
being all in a non-dormant (non-dormant) state; and
there is a search space for scheduling the target cell on an activated bandwidth part (Bandwidth Part, BWP) of each scheduling cell.

Optionally, the size of the DCI determined in step 21 satisfies at least one of the following:
the size of the DCI, used to schedule the target cell, of each scheduling cell satisfies a first condition, that is, for a scheduled target cell, a budget (budget) of the size of the DCI is defined based on each scheduling cell; and
a size of DCI of the L scheduling cells that is used to schedule the target cell satisfies the first condition, that is, for a scheduled target cell, a budget of the size of the DCI is defined based on all scheduling cells.

In other words, when determining the size of the DCI of each scheduling cell, the communication device may determine the size of the DCI of each scheduling cell based on the first condition, so that the determined size of the DCI satisfies the corresponding first condition.

Optionally, the foregoing first condition may include at least one of the following:
a quantity of different sizes of DCI used by a terminal to perform PDCCH monitoring is not greater than a first value; and
a quantity of different sizes of DCI used by a terminal to perform PDCCH monitoring scrambled by using a specific identifier is not greater than a second value.

It should be noted that, the foregoing first value and/or second value may be selected based on an actual requirement, and the two may be same or different. This is not limited. For example, the first value is 4, and the second value is 3. The foregoing specific identifier may be a specific radio network temporary identifier (Radio Network Temporary Identifier, RNTI), such as a cell RNTI (Cell RNTI, C-RNTI).

In the information processing method in this embodiment of this application, when the L scheduling cells are used to schedule the target cell, the size of the DCI, used to schedule the target cell, of each scheduling cell may be determined. L≥2. The size of the DCI satisfies at least one of the following: the size of the DCI, used to schedule the target cell, of each scheduling cell satisfies the first condition; and the size of the DCI of the L scheduling cells that is used to schedule the target cell satisfies the first condition. In this way, a requirement on the size of the DCI may be satisfied when a plurality of cells are used to schedule a same cell.

In this embodiment of this application, when the size of the DCI of the L scheduling cells that is used to schedule the target cell satisfies a first condition, the determining a size of DCI of each scheduling cell may include: when a first domain exists by default or is configured in DCI of at least one of the L scheduling cells, determining that the first domain exists in the DCI of the L scheduling cells, and that a size of the first domain in the DCI of each scheduling cell is N bits. In other words, when the first domain exists by default or is configured in the DCI of at least one of the L scheduling cells, the first domain exists by default or is compulsively configured in the DCI of the L scheduling cells, that is, the first domain exists in the DCI of all the scheduling cells, and the size of the first domain is N bits. N is greater than 1.

Optionally, N is determined based on at least one of the following:
a predefinition in a protocol;
configuration by a network side device such as a base station; and
a maximum value in sizes of the first domain existing by default or configured in the DCI of the at least one scheduling cell.

Optionally, for another scheduling cell other than the at least one scheduling cell of the L scheduling cells, a first domain in DCI of the another scheduling cell is ignored by the terminal when the terminal performs DCI detection, and/or the first domain in the DCI of the another scheduling cell is set to a predefined value or a configured value. In other words, when DCI of one of the L scheduling cells is not configured with or does not need a function corresponding to the first domain, the terminal may ignore the first domain in the DCI, and/or a value of the first domain in the DCI is set to the predefined value or the configured value.

For example, for a network side device, if the first domain exists by default or is configured in the DCI of the at least one of the L scheduling cells, the network side device may configure that the first domain exists in the DCI of all L scheduling cells. A value of the first domain in the DCI of the another scheduling cell other than the at least one scheduling cell of the L scheduling cells is set to the predefined value or the configured value, and generated DCI is sent to the terminal.

For another example, for a terminal, if the first domain exists by default or is configured in the DCI of the at least one of the L scheduling cells, the terminal determines that the first domain exists in the DCI of all L scheduling cells. The value of the first domain in the DCI of the another scheduling cell other than the at least one scheduling cell of the L scheduling cells is set to the predefined value or the configured value, and the terminal ignores the first domain in the DCI of the another scheduling cell when performing DCI detection.

Optionally, when a size of the first domain that is required by DCI of a first scheduling cell in the L scheduling cells is M bits, and M is less than N, M preset bits of the first domain in the DCI of the first scheduling cell are for function indication, and other N - M bits other than the M preset bits in the first domain are set to a first preset value. The first preset value may be set based on an actual requirement, such as 0. The first scheduling cell may be any cell that satisfies a corresponding condition in the L scheduling cells. This is not limited.

Optionally, the M preset bits may be any of the following: first M bits of the N bits in the first domain; or last M bits of the N bits in the first domain.

For example, when a size M of the first domain required by DCI of a scheduling cell is less than the determined size N of the first domain, UE may perform functional indication of the first domain by using high M bits or low M bits, and other N - M bits are set to a specific value such as 0.

Optionally, the foregoing first domain may include at least one of the following:
a carrier indication field (Carrier Indication Field, CIF) domain;
a transmission configuration indication (Transmission configuration indication) domain;
a secondary cell dormancy indication (Scell dormancy indication) domain; and
a bit domain padded during DCI size alignment (DCI size alignment).

In some embodiments, for DCI 0_1 or DCI 1_1, when a cell scheduled by using the DCI and a cell in which the DCI is located are not a same cell (that is, cross-carrier scheduling), a CIF field of the DCI is 3 bits. When a cell scheduled by using the DCI and a cell in which the DCI is located are a same cell (that is, self-scheduling), whether a CIF field of the DCI exists depends on a configuration parameter of self-scheduling by a radio resource control (Radio Resource Control, RRC) signaling.

In some embodiments, for DCI 0_1 or DCI 1_1, a Scell dormancy indication domain of DCI exists when all the following conditions are satisfied, and a size of the Scell dormancy indication domain is determined based on a quantity of cell groups (Groups) configured in a secondary cell (Scell): (1) the DCI is transmitted within discontinuous reception (Discontinuous Reception, DRX) active time (active time) of a primary cell (Pcell); (2) at least one Scell is configured with *dormancyGroupWithinActiveTime*; (3) at least one Scell is configured with more than two downlink (Downlink, DL) BWPs.

In some embodiments, for DCI 1_1, a transmission configuration indication domain of the DCI is configured in each control resource set (Coreset) of a BWP of a scheduling cell. When a plurality of Coresets in a BWP are configured differently, a size of the field is different, such as 0 or 3 bits (bits). When a plurality of search spaces are associated with different Coresets in a BWP, and sizes of the DCI 1_1 are different, 0 should be padded to the end of the DCI 1_1 to unify the sizes to a maximum size (size).

In this embodiment of this application, when the budget of the size of the DCI is defined based on all scheduling cells, different sizes of DCI in a same DCI format in different scheduling cells may be used as a same size of DCI. For that the size of the DCI of the L scheduling cells that is used to schedule the target cell satisfies the first condition, when sizes of DCI of different scheduling cells in a same DCI format (such as DCI 0_1 or DCI 1_1) in the L scheduling cells are different, the sizes of the DCI of the different scheduling cells are considered to be the same. In other words, for the different scheduling cells in the same DCI format, even if the determined sizes of the DCI are different, the different sizes of the DCI are used as a same size of DCI to determine whether the first condition is satisfied.

Optionally, when the budget of the size of the DCI is defined based on all scheduling cells, sizes of DCI in a same DCI format in different scheduling cells may be controlled to be the same. To be specific, in a case that the size of the DCI of the L scheduling cells that is used to schedule the target cell satisfies the first condition, for determining the size of the DCI, used to schedule the target cell, of each scheduling cell, when sizes of DCI of different scheduling cells in a first DCI format are initially determined to be different, sizes of DCI of all scheduling cells in the first DCI format may be determined to be a third value, so that the sizes of the DCI of all scheduling cells in the first DCI format can be aligned. The first DCI format is, for example, DCI 1_1 or DCI 0_1.

The third value may be a maximum value in the initially determined sizes of the DCI of all the scheduling cells in the first DCI format, or the third value may be a second preset value. The second preset value may be set based on an actual requirement, may be configured/defined for per DCI format (per DCI format), may be configured/defined for all DCI formats (all DCI formats), or may be a maximum value in sizes of DCI in all DCI formats. This is not limited.

In some embodiments, for a same DCI format of different scheduling cells, if initially determined sizes of DCI are different, sizes of DCI of all scheduling cells in the DCI format are determined to be a preset value or a maximum value in the initially determined sizes of the DCI. A deficient part may be obtained by supplementing a specific value, such as 0, to a first or last bit.

Optionally, when a budget of the size of the DCI is defined based on all scheduling cells, sizes of DCI in a same DCI format in different scheduling cells may be controlled to be the same. To be specific, in a case that the size of the DCI of the L scheduling cells that is used to schedule the target cell satisfies the first condition, the determining the size of the DCI, used to schedule the target cell, of each scheduling cell may include: determining an initial size of the DCI, used to schedule the target cell, of each scheduling cell; and under the initial size of the DCI, when an initial size of DCI of the L scheduling cells does not satisfy the first condition, adjusting the size of the DCI, used to schedule the target cell, of each scheduling cell to enable the size of the DCI of the L scheduling cells that is used to schedule the target cell to satisfy the first condition.

Optionally, the foregoing process of adjusting the size of the DCI, used to schedule the target cell, of each scheduling cell may include: when sizes of DCI of different scheduling cells in a second DCI format are initially determined to be different, determining that sizes of DCI of all scheduling cells in the second DCI format are a fourth value, so that the sizes of the DCI of all scheduling cells in the second DCI format can be aligned. The second DCI format is, for example, DCI 1_1 or DCI 0_1.

The fourth value may be a maximum value in the initially determined sizes of the DCI of all the scheduling cells in the second DCI format, or the fourth value may be a third preset value. The third preset value may be set based on an actual requirement, may be configured/defined for per DCI format (per DCI format), may be configured/defined for all DCI formats (all DCI formats), or may be a maximum value in sizes of DCI in all DCI formats. This is not limited.

In some embodiments, when a size of DCI is adjusted, for one or more specific DCI formats of different scheduling cells, if initially determined sizes of DCI are different, sizes of DCI of all scheduling cells in the DCI format are adjusted to be a preset value or a maximum value in the initially determined sizes of the DCI. A deficient part may be obtained by supplementing a specific value, such as 0, to a first or last bit.

The following describes this application with reference to specific embodiments.

### Embodiment 1

When a same cell is scheduled by using a plurality of cells, or a Scell is used to schedule a configuration of a Pcell (that is, the Pcell is scheduled by using both the Scell and the Pcell), determining of a size of DCI and a related procedure of DCI size alignment are performed independently based on each scheduling cell. Finally, it is determined that a size of DCI of each scheduling cell satisfies the following condition:

for each scheduling cell used to schedule the target cell, a quantity of different sizes of DCI not expected by UE to be used to perform PDCCH monitoring is greater than four, and a quantity of different sizes of DCI not expected by the UE to be used to perform PDCCH monitoring scrambled by using a C-RNTI is greater than three.

### Embodiment 2

When a same cell is scheduled by using a plurality of cells, or a Scell is used to schedule a configuration of a Pcell (that is, the Pcell is scheduled by using both the Scell and the Pcell), determining of a size of DCI and a related procedure of DCI size alignment are performed independently based on each scheduling cell. For a same DCI format of different scheduling cells, even if determined sizes of DCI are different, the different sizes of the DCI are used as a same size of DCI to determine whether the following condition is satisfied:

for the scheduled target cell, that is, all scheduling cells, a quantity of different sizes of DCI not expected by UE to be used to perform PDCCH monitoring is greater than four, and a quantity of different sizes of DCI not expected by the UE to be used to perform PDCCH monitoring scrambled by using a C-RNTI is greater than three.

### Embodiment 3

When a same cell is scheduled by using a plurality of cells, or a Scell is used to schedule a configuration of a Pcell (that is, the Pcell is scheduled by using both the Scell and the Pcell), an initial size of DCI is determined independently based on each scheduling cell. For a same DCI format of different scheduling cells, if initially determined sizes of DCI are different, sizes of DCI of all scheduling cells under the DCI format are a maximum value in the initially determined sizes of the DCI. A deficient part is obtained by supplementing a specific value (such as 0) to a first or last bi. Then, whether the obtained size of DCI satisfies the following condition is determined:

for the scheduled target cell, that is, all scheduling cells, a quantity of different sizes of DCI not expected by UE to be used to perform PDCCH monitoring is greater than four, and a quantity of different sizes of DCI not expected by the UE to be used to perform PDCCH monitoring scrambled by using a C-RNTI is greater than three.

### Embodiment 4

When a same cell is scheduled by using a plurality of cells, or a Scell is used to schedule a configuration of a Pcell (that is, the Pcell is scheduled by using both the Scell and the Pcell), for some particular domains in DCI, sizes of these domains in DCI of each scheduling cell need to be determined with reference to situations of a plurality of scheduling cells, and finally a size of the DCI of each scheduling cell is determined.

For example, for a CIF domain in DCI, DCI 1_1/0_1 of all cells used to schedule a target cell (such as the Pcell and the Scell) have the CIF domain.

For another example, for a transmission configuration indication domain in DCI, sizes of transmission configuration indication domains in DCI 1_1 of all cells used to schedule a target cell (such as the Pcell and the Scell) are the same, and all are a maximum value in sizes of transmission configuration indication domain determined in at least one scheduling cell.

For another example, for a Scell dormancy indication domain in DCI, Scell dormancy indication domains exist in DCI 1_1 of all cells used to schedule a target cell (such as the Pcell and the Scell) and have a same size.

For another example, if one of all scheduling cells adds one bit to DCI 0_1/DCI 0_1 to distinguish different DCI formats in a process of DCI size alignment, one bit is padded to DCI 0_1/DCI 0_1 of all scheduling cells (such as the Pcell and the Scell). For example, if a size of non-fallback (non-Fallback) DCI 0_1 of a user-specific search space (user-specific search space, USS) is the same as a size of fallback (fallback) DCI of another USS, one-bit 0 may be padded to the end of DCI 0_1. If a size of non-fallback DCI 1_1 of a USS is the same as the size of the fallback DCI of the another USS, one-bit 0 may be padded to the end of DCI 1_1.

### Embodiment 5

When a same cell is configured to be scheduled by using L cells, L≥2, and the L cells are in an activated state and a non-dormant state, a DCI budget is defined based on an assumption that the L cells are used to schedule a target cell. Particularly, when a Scell is configured to be used to schedule a Pcell, that is, when the Pcell is scheduled by using both the Scell and the Pcell, after the Scell is switched to a deactivated (deactivated) state or a dormant (dormant) state, the DCI budget is adjusted to be defined based on a scenario in which the Pcell is scheduled by using only the Pcell.

It should be noted that, in the information processing method provided in embodiments of this application, an execution subject may be an information processing apparatus, or a control module for executing the information processing method in the information processing apparatus. In embodiments of this application, an example in which the information processing apparatus executes the information processing method is used to describe the information processing apparatus provided in embodiments of this application.

FIG. 3 is a schematic diagram of a structure of an information processing apparatus according to an embodiment of this application. The apparatus is applied to a communication device, and the communication device may be a terminal or network side device. As shown in FIG. 3, an information processing apparatus 30 includes:
a determining module 31, configured to determine, when L scheduling cells are used to schedule a target cell, a size of DCI of each scheduling cell, where the DCI is used to schedule the target cell;
L is greater than or equal to 2, and the size of the DCI satisfies at least one of the following:
the size of the DCI, used to schedule the target cell, of each scheduling cell satisfies a first condition; and
a size of DCI of the L scheduling cells that is used to schedule the target cell satisfies the first condition.

Optionally, the first condition includes at least one of the following:
a quantity of different sizes of DCI used by a terminal to perform PDCCH monitoring is not greater than a first value; and
a quantity of different sizes of DCI used by a terminal to perform PDCCH monitoring scrambled by using a specific identifier is not greater than a second value.

Optionally, when the size of the DCI of the L scheduling cells that is used to schedule the target cell satisfies the first condition, the determining module 31 is further configured to:
when a first domain exists by default or is configured in DCI of at least one of the L scheduling cells, determine that the first domain exists in the DCI of the L scheduling cells, and that a size of the first domain in the DCI of each scheduling cell is N bits, where N is greater than 1.

Optionally, N is determined based on at least one of the following:
a predefinition in a protocol;
configuration by a network side device; and
a maximum value in sizes of the first domain existing by default or configured in the DCI of the at least one scheduling cell.

Optionally, the first domain includes at least one of the following:
a carrier indication field CIF domain;
a transmission configuration indication domain;
a secondary cell dormancy indication domain; and
a bit domain padded during DCI size alignment.

Optionally, for another scheduling cell other than the at least one scheduling cell of the L scheduling cells, a first domain in DCI of the another scheduling cell is ignored by the terminal when the terminal performs DCI detection, and/or the first domain in the DCI of the another scheduling cell is set to a predefined value or a configured value.

Optionally, when a size of the first domain that is required by DCI of a first scheduling cell in the L scheduling cells is M bits, and M is less than N, M preset bits of the first domain in the DCI of the first scheduling cell are for function indication, and other N - M bits other than the M preset bits in the first domain are set to a first preset value.

Optionally, the M preset bits are any of the following:
first M bits of the N bits in the first domain; or
last M bits of the N bits in the first domain.

Optionally, for that the size of the DCI of the L scheduling cells that is used to schedule the target cell satisfies the first condition, when sizes of DCI of different scheduling cells in a same DCI format in the L scheduling cells are different, the sizes of the DCI of the different scheduling cells are considered to be the same.

Optionally, in a case that the size of the DCI of the L scheduling cells that is used to schedule the target cell satisfies the first condition, the determining module 31 is further configured to:
when sizes of DCI of different scheduling cells in a first DCI format in the L scheduling cells are initially determined to be different, determine that sizes of DCI of all scheduling cells in the first DCI format are a third value.

The third value is a maximum value in the initially determined sizes of the DCI of all the scheduling cells in the first DCI format, or the third value is a second preset value.

Optionally, in a case that the size of the DCI of the L scheduling cells that is used to schedule the target cell satisfies the first condition, the determining module 31 includes:
a determining unit, configured to determine an initial size of the DCI, used to schedule the target cell, of each scheduling cell; and
an adjustment unit, configured to adjust, under the initial size of the DCI and when an initial size of the DCI of the L scheduling cells does not satisfy the first condition, the size of the DCI, used to schedule the target cell, of each scheduling cell.

Optionally, the adjustment unit is specifically configured to:
when sizes of DCI of different scheduling cells in a second DCI format are initially determined to be different, determine that sizes of DCI of all scheduling cells in the second DCI format are a fourth value.

The fourth value is a maximum value in the initially determined sizes of the DCI of all the scheduling cells in the second DCI format, or the fourth value is a third preset value.

Optionally, the L scheduling cells satisfy at least one of the following:
being all in an activated state;
being all in a non-dormant state; and
there is a search space for scheduling the target cell on an activated bandwidth part BWP of each scheduling cell.

The information processing apparatus 30 in this embodiment of this application may be an apparatus, an apparatus or electronic device with an operating system, or may be a component, an integrated circuit or a chip in the terminal. The apparatus or electronic device may be a mobile terminal, or a non-mobile terminal. For example, the mobile terminal may include but is not limited to the type of the terminal 11 listed above. The non-mobile terminal may be a server, a network attached storage (Network Attached Storage, NAS), a personal computer (personal computer, PC), a television (television, TV), a teller machine or a self-service machine, and the like, which are not specifically limited in this embodiment of this application.

The information processing apparatus 30 provided in this embodiment of this application can implement the processes implemented by the foregoing embodiments of the information processing method, and achieve the same technical effect. To avoid repetition, details are not described herein again.

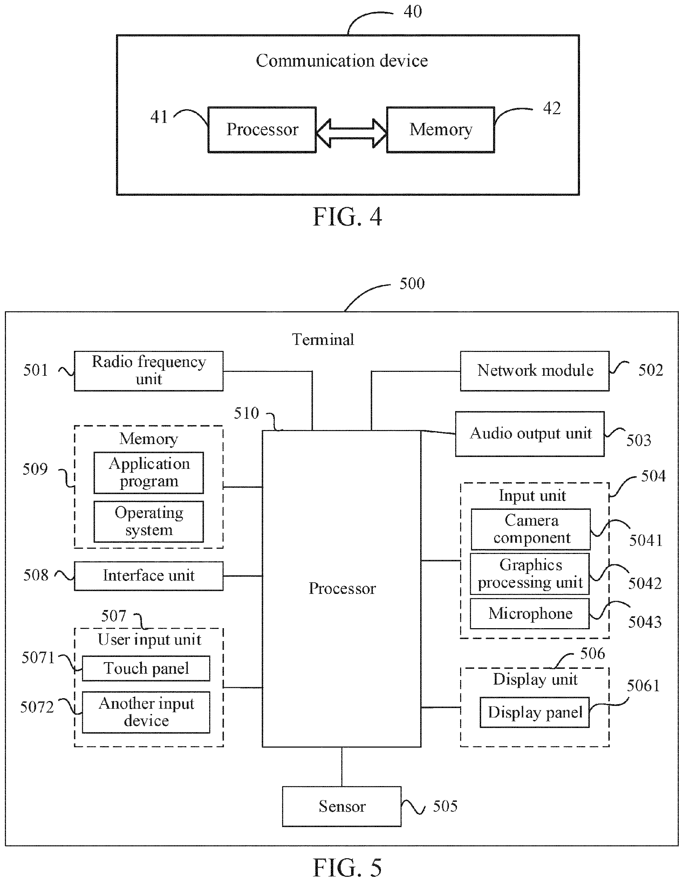

Optionally, as shown in FIG. 4, an embodiment of this application further provides a communication device 40, including a processor 41, a memory 42, and a program or instructions stored in the memory 42 and executed on the processor 41. When the program or instructions are executed by the processor 41, the processes of the foregoing embodiments of the information processing method are implemented, and the same technical effect is achieved. To avoid repetition, details are not described herein again. Optionally, the communication device 40 may be a terminal or a network side device.

An embodiment of this application further provides a terminal, including a processor and a communication interface. The processor is configured to determine, when L scheduling cells are used to schedule the target cell, determine a size of DCI of each scheduling cell, where the DCI is used to schedule the target cell. L is greater than or equal to 2, and the size of the DCI satisfies at least one of the following: the size of the DCI, used to schedule the target cell, of each scheduling cell satisfies a first condition; and a size of DCI of the L scheduling cells that is used to schedule the target cell satisfies the first condition. The first condition includes at least one of the following: a quantity of different sizes of DCI used by a terminal to perform PDCCH monitoring is not greater than a first value; and a quantity of different sizes of DCI used by a terminal to perform PDCCH monitoring scrambled by using a specific identifier is not greater than a second value. The embodiment of the terminal can implement the processes of the foregoing embodiments of the information processing method, and can achieve the same technical effect. To avoid repetition, details are not described herein again.

Specifically, FIG. 5 is a schematic diagram of a hardware structure of a terminal according to an embodiment of this application.

A terminal 500 includes, but is not limited to: at least parts of components such as a radio frequency unit 501, a network module 502, an audio output unit 503, an input unit 504, a sensor 505, a display unit 506, a user input unit 507, an interface unit 508, a memory 509, and a processor 510.

A person skilled in the art should understand that, the terminal 500 may further include a power supply (such as a battery) for supplying power to the components. The power supply may be logically connected to the processor 510 by a power management system, thereby implementing functions such as charging, discharging, and power consumption management by using a power management system. The terminal structure shown in FIG. 5 does not constitute a limitation on the terminal, and the terminal may include more or fewer components than those shown in the figure, or some components may be combined, or different component arrangements may be used, and details are not described herein again.

It should be understood that, in this embodiment of this application, the input unit 504 may include a camera component 5041, a graphics processing unit (Graphics Processing Unit, GPU) 5042 and a microphone 5043. The graphics processing unit 5042 processes image data of a static picture or a video obtained by an image capturing device (for example, a camera) in a video capturing mode or an image capturing mode. The display unit 506 may include a display panel 5061, and the display panel 5061 may be configured in the form of a liquid crystal display, an organic light emitting diode, or the like. The user input unit 507 includes a touch panel 5071 and another input device 5072. The touch panel 5071 is also referred to as a touch screen. The touch panel 5071 may include two parts: a touch detection apparatus and a touch controller. The another input device 5072 may include, but is not limited to, a physical keyboard, a functional key (such as a volume control key or a switch key), a track ball, a mouse, and a joystick, and details are not described herein again.

In this embodiment of this application, the radio frequency unit 501 receives downlink data from a network side device and sends the data to the processor 510 for processing. In addition, the radio frequency unit 501 sends uplink data to the network side device. Generally, the radio frequency unit 501 includes, but is not limited to, an antenna, at least one amplifier, a transceiver, a coupler, a low noise amplifier, a duplexer, and the like.

The memory 509 may be configured to store a software program or instructions and various data. The memory 509 may mainly include a program or instructions storage area and a data storage area. The program or instructions storage area may store an operating system, an application program or instructions required by at least one function (for example, a sound playback function and an image display function), and the like. In addition, the memory 509 may include a high-speed random access memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. For example, at least one magnetic disk storage device, flash memory device, or another non-volatile solid state storage device.

The processor 510 may include one or more processing units. Optionally, the processor 510 may integrate an application processor and a modem processor. The application processor mainly processes an operating system, a user interface, an application program or instructions, and the like. The modem processor mainly processes wireless communication such as a baseband processor. It can be understood that, the modem processor may not be integrated into the processor 510.

The processor 510 is configured to determine, when L scheduling cells are used to schedule the target cell, a size of DCI of each scheduling cell, where the DCI is used to schedule the target cell. L is greater than or equal to 2, and the size of the DCI satisfies at least one of the following: the size of the DCI, used to schedule the target cell, of each scheduling cell satisfies a first condition; and a size of DCI of the L scheduling cells that is used to schedule the target cell satisfies the first condition.

It can be understood that, the terminal 500 provided in this embodiment of this application can implement the processes of the foregoing embodiments of the information processing method, and can achieve the same technical effect. To avoid repetition, details are not described herein again.

Embodiments of this application further provide a network side device, including a processor and communication interface. The processor is configured to determine, when L scheduling cells are used to schedule the target cell, determine a size of DCI of each scheduling cell, where the DCI is used to schedule the target cell. L is greater than or equal to 2, and the size of the DCI satisfies at least one of the following: the size of the DCI, used to schedule the target cell, of each scheduling cell satisfies a first condition; and a size of DCI of the L scheduling cells that is used to schedule the target cell satisfies the first condition. The first condition includes at least one of the following: a quantity of different sizes of DCI used by a terminal to perform PDCCH monitoring is not greater than a first value; and a quantity of different sizes of DCI used by a terminal to perform PDCCH monitoring scrambled by using a specific identifier is not greater than a second value. The embodiment of the network side device can implement the processes of the foregoing embodiments of the information processing method, and can achieve the same technical effect. To avoid repetition, details are not described herein again.

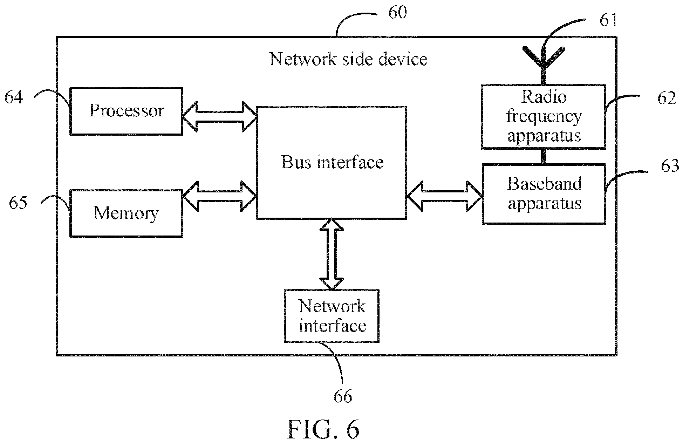

Specifically, an embodiment of this application further provides a network side device. As shown in FIG. 6, the network side device 60 includes: an antenna 61, a radio frequency apparatus 62, and a baseband apparatus 63. The antenna 61 is connected to the radio frequency apparatus 62. In an uplink direction, the radio frequency apparatus 62 receives information through the antenna 61 and sends the received information to the baseband apparatus 63 for processing. In a downlink direction, the baseband apparatus 63 processes to-be-sent information and sends it to the radio frequency apparatus 62. The radio frequency apparatus 62 processes the received information and then sends it out through the antenna 61.

The foregoing frequency band processing device may be located in the baseband apparatus 63, and the method performed by the network side device in the foregoing embodiments may be implemented in the baseband apparatus 63. The baseband apparatus 63 includes a processor 64 and a memory 65.

The baseband apparatus 63 may include, for example, at least one baseband board on which a plurality of chips are disposed. As shown in FIG. 6, one of the chips, such as the processor 64, is connected to the memory 65, to invoke a program in the memory 65 and execute operations performed by the network side device shown in the foregoing method embodiments.

The baseband apparatus 63 may also include a network interface 66 and is configured to exchange information with the radio frequency apparatus 62. The interface is, for example, a common public radio interface (common public radio interface, CPRI).

Specifically, the network side device in this embodiment of this application further includes: instructions or a program stored in the memory 65 and executable on the processor 64. The processor 64 invokes the instructions or program in the memory 65 to execute the methods performed by modules shown in FIG. 3 and achieve the same technical effect. To avoid repetition, details are not described herein again.

Embodiments of this application further provide a readable storage medium, storing a program or instructions. When the program or instructions are executed by the processor, the processes of the foregoing embodiments of the information processing method are implemented, and the same technical effect is achieved. To avoid repetition, details are not described herein again.

The processor is the processor in the terminal described in the foregoing embodiments. The readable storage medium includes a computer-readable storage medium, such as computer read-only memory (Read-Only Memory, ROM), random access memory (Random Access Memory, RAM), a magnetic disk or an optical disk.

An embodiment of this application further provides a chip, including a processor and a communication interface. The communication interface is coupled to the processor. The processor is configured to run a program or instructions to implement the processes of the foregoing embodiments of the information processing method and can achieve the same technical effects. To avoid repetition, details are not described herein again.

It should be understood that, the chip mentioned in this embodiment of this application may also be referred to as a system-level chip, a system chip, a chip system, a system on chip or the like.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, an element limited by the sentence "include a/an..." does not exclude that there are still other same elements in the process, method, object, or apparatus including the element. In addition, it should be pointed out that, the scope of the method and apparatus in embodiments of this application is not limited to performing functions in the order shown or discussed, but may also include performing functions in a substantially simultaneous manner or in a reverse order based on the functions involved. For example, the methods described may be performed in an order different from that described, and various steps may be padded, omitted, or combined. In addition, features described with reference to some examples may be combined in other examples.

Through the descriptions of the foregoing implementations, a person skilled in the art may clearly understand that the method according to the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the related technology may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network side device, or the like) to perform the methods described in embodiments of this application.

Embodiments of this application are described above with reference to the accompanying drawings. However, this application is not limited to the foregoing specific implementations. The foregoing specific implementations are merely illustrative instead of limitative. Under the inspiration of this application, a person of ordinary skill in the art can make many forms without departing from the spirit of this application and the protection scope of the claims, and all of the forms shall fall within the protection of this application.

## Claims

1. An information processing method, comprising:
in a case that L scheduling cells are used to schedule a target cell, determining, by a communication device, a size of downlink control information DCI of each scheduling cell, wherein the DCI is used to schedule the target cell;
L is greater than or equal to 2, and the size of the DCI satisfies at least one of the following:
the size of the DCI, used to schedule the target cell, of each scheduling cell satisfies a first condition; and
a size of DCI of the L scheduling cells that is used to schedule the target cell satisfies the first condition; and
the first condition comprises at least one of the following:
a quantity of different sizes of DCI used by a terminal to perform physical downlink control channel PDCCH monitoring is not greater than a first value; and
a quantity of different sizes of DCI used by a terminal to perform PDCCH monitoring scrambled by using a specific identifier is not greater than a second value.

2. The method according to claim 1, wherein in a case that the size of the DCI of the L scheduling cells that is used to schedule the target cell satisfies the first condition, the determining a size of downlink control information DCI of each scheduling cell comprises:
in a case that a first domain exists by default or is configured in DCI of at least one of the L scheduling cells, determining, by the communication device, that the first domain exists in the DCI of the L scheduling cells, and that a size of the first domain in the DCI of each scheduling cell is N bits, wherein
N is greater than 1.

3. The method according to claim 2, wherein N is determined based on at least one of the following:
a predefinition in a protocol;
configuration by a network side device; and
a maximum value in sizes of the first domain existing by default or configured in the DCI of the at least one scheduling cell.

4. The method according to claim 2, wherein the first domain comprises at least one of the following:
a carrier indication field CIF domain;
a transmission configuration indication domain;
a secondary cell dormancy indication domain; and
a bit domain padded during DCI size alignment.

5. The method according to claim 2, wherein for another scheduling cell other than the at least one scheduling cell of the L scheduling cells, a first domain in DCI of the another scheduling cell is ignored by the terminal when the terminal performs DCI detection, and/or the first domain in the DCI of the another scheduling cell is set to a predefined value or a configured value.

6. The method according to claim 2, wherein in a case that a size of the first domain that is required by DCI of a first scheduling cell in the L scheduling cells is M bits, and M is less than N, M preset bits of the first domain in the DCI of the first scheduling cell are for function indication, and other N - M bits other than the M preset bits in the first domain are set to a first preset value.

7. The method according to claim 6, wherein the M preset bits are any one of the following:
first M bits of the N bits in the first domain; or
last M bits of the N bits in the first domain.

8. The method according to claim 1, wherein for that the size of the DCI of the L scheduling cells satisfies the first condition, in a case that sizes of DCI of different scheduling cells in a same DCI format in the L scheduling cells are different, the sizes of the DCI of the different scheduling cells are considered to be the same.

9. The method according to claim 1, wherein in a case that the size of the DCI of the L scheduling cells that is used to schedule the target cell satisfies the first condition, the determining a size of downlink control information DCI of each scheduling cell comprises:
in a case that sizes of DCI of different scheduling cells in a first DCI format in the L scheduling cells are initially determined to be different, determining, by the communication device, that sizes of DCI of all scheduling cells in the first DCI format are a third value, wherein
the third value is a maximum value in the initially determined sizes of the DCI of all the scheduling cells in the first DCI format, or the third value is a second preset value.

10. The method according to claim 1, wherein in a case that the size of the DCI of the L scheduling cells that is used to schedule the target cell satisfies the first condition, the determining a size of downlink control information DCI of each scheduling cell comprises:
determining, by the communication device, an initial size of the DCI, used to schedule the target cell, of each scheduling cell; and
under the initial size of the DCI, in a case that an initial size of the DCI of the L scheduling cells does not satisfy the first condition, adjusting, by the communication device, the size of the DCI, used to schedule the target cell, of each scheduling cell.

11. The method according to claim 10, wherein the adjusting the size of the DCI, used to schedule the target cell, of each scheduling cell comprises:
in a case that sizes of DCI of different scheduling cells in a second DCI format in the L scheduling cells are initially determined to be different, determining, by the communication device, that sizes of DCI of all scheduling cells in the second DCI format are a fourth value, wherein
the fourth value is a maximum value in the initially determined sizes of the DCI of all the scheduling cells in the second DCI format, or the fourth value is a third preset value.

12. The method according to claim 1, wherein the L scheduling cells satisfy at least one of the following:
being all in an activated state;
being all in a non-dormant state; and
there is a search space for scheduling the target cell on an activated bandwidth part BWP of each scheduling cell.

13. An information processing apparatus, comprising:
a determining module, configured to determine, in a case that L scheduling cells are used to schedule a target cell, a size of DCI of each scheduling cell, wherein the DCI is used to schedule the target cell;
L is greater than or equal to 2, and the size of the DCI satisfies at least one of the following:
the size of the DCI, used to schedule the target cell, of each scheduling cell satisfies a first condition; and
a size of DCI of the L scheduling cells that is used to schedule the target cell satisfies the first condition; and
the first condition comprises at least one of the following:
a quantity of different sizes of DCI used by a terminal to perform PDCCH monitoring is not greater than a first value; and
a quantity of different sizes of DCI used by a terminal to perform PDCCH monitoring scrambled by using a specific identifier is not greater than a second value.

14. The apparatus according to claim 13, wherein in a case that the size of the DCI of the L scheduling cells that is used to schedule the target cell satisfies the first condition, the determining module is further configured to:
in a case that a first domain exists by default or is configured in DCI of at least one of the L scheduling cells, determine that the first domain exists in the DCI of the L scheduling cells, and that a size of the first domain in the DCI of each scheduling cell is N bits, wherein
N is greater than 1.

15. The apparatus according to claim 14, wherein the first domain comprises at least one of the following:
a carrier indication field CIF domain;
a transmission configuration indication domain;
a secondary cell dormancy indication domain; and
a bit domain padded during DCI size alignment.

16. The apparatus according to claim 14, wherein for another scheduling cell other than the at least one scheduling cell of the L scheduling cells, a first domain in DCI of the another scheduling cell is ignored by the terminal when the terminal performs DCI detection, and/or the first domain in the DCI of the another scheduling cell is set to a predefined value or a configured value.

17. The apparatus according to claim 14, wherein in a case that a size of the first domain that is required by DCI of a first scheduling cell in the L scheduling cells is M bits, and M is less than N, M preset bits of the first domain in the DCI of the first scheduling cell are for function indication, and other N - M bits other than the M preset bits in the first domain are set to a first preset value.

18. The apparatus according to claim 17, wherein the M preset bits are any one of the following:
first M bits of the N bits in the first domain; or
last M bits of the N bits in the first domain.

19. The apparatus according to claim 13, wherein for that the size of the DCI of the L scheduling cells that is used to schedule the target cell satisfies the first condition, in a case that sizes of DCI of different scheduling cells in a same DCI format in the L scheduling cells are different, the sizes of the DCI of the different scheduling cells are considered to be the same.

20. The apparatus according to claim 13, wherein in a case that the size of the DCI of the L scheduling cells that is used to schedule the target cell satisfies the first condition, the determining module is further configured to:
in a case that sizes of DCI of different scheduling cells in a first DCI format in the L scheduling cells are initially determined to be different, determine that sizes of DCI of all scheduling cells in the first DCI format are a third value, wherein
the third value is a maximum value in the initially determined sizes of the DCI of all the scheduling cells in the first DCI format, or the third value is a second preset value.

21. The apparatus according to claim 13, wherein in a case that the size of the DCI of the L scheduling cells that is used to schedule the target cell satisfies the first condition, the determining module comprises:
a determining unit, configured to determine an initial size of the DCI, used to schedule the target cell, of each scheduling cell; and
an adjustment unit, configured to adjust, under the initial size of the DCI and in a case that an initial size of the DCI of the L scheduling cells does not satisfy the first condition, the size of the DCI, used to schedule the target cell, of each scheduling cell.

22. The apparatus according to claim 21, wherein the adjustment unit is specifically configured to:
in a case that sizes of DCI of different scheduling cells in a second DCI format in the L scheduling cells are initially determined to be different, determine that sizes of DCI of all scheduling cells in the second DCI format are a fourth value, wherein
the fourth value is a maximum value in the initially determined sizes of the DCI of all the scheduling cells in the second DCI format, or the fourth value is a third preset value.

23. A communication device, comprising a processor, a memory, and a program or instructions stored in the memory and executable on the processor, wherein when the program or instructions are executed by the processor, steps of the information processing method according to any one of claims 1 to 12 are implemented.

24. A readable storage medium, storing a program or instructions, wherein when the program or instructions are executed by a processor, steps of the information processing method according to any one of claims 1 to 12 are implemented.
